Europäisches Patentamt

European Patent Office

Office européen des brevets

(11) Publication number: **0 083 207**
**B1**

(12) **EUROPEAN PATENT SPECIFICATION**

(45) Date of publication of patent specification: **11.03.87**

(21) Application number: **82306886.1**

(22) Date of filing: **23.12.82**

(51) Int. Cl.⁴: **G 11 B 27/36,** G 11 B 5/008, G 11 B 5/02 // G11B5/035, G11B5/03

(54) Automatic adjustment of recording conditions for tape recorders having auto reverse function.

(30) Priority: **26.12.81 JP 213001/81**

(43) Date of publication of application:
**06.07.83 Bulletin 83/27**

(45) Publication of the grant of the patent:
**11.03.87 Bulletin 87/11**

(84) Designated Contracting States:
**DE FR GB NL**

(56) References cited:
GB-A-1 148 461
GB-A-2 054 245
US-A-2 528 682
US-A-3 265 818
US-A-3 665 118
US-A-4 142 215
US-A-4 297 730
US-A-4 297 738

IBM TECHNICAL DISCLOSURE BULLETIN, vol.
17, no. 1, June 1974, pages 217-218, Armonk
N.Y. (USA); T. A. SCHWARZ: "Compensation
for element-to-element misregistration in a
dual element head"

(73) Proprietor: **Kabushiki Kaisha Toshiba
72, Horikawa-cho Saiwai-ku
Kawasaki-shi Kanagawa-ken 210 (JP)**

(72) Inventor: **Tada, Naotomo c/o Patent Division
Tokyo Shibaura Denki K.K. 72, Horikawa-cho
Saiwai-ku Kawasaki-shi Kanagawa-ken, 210 (JP)**
Inventor: **Ishigo, Hideyasu c/o Patent Division
Tokyo Shibaura Denki K.K. 72, Horikawa-cho
Saiwai-ku Kawasaki-shi Kanagawa-ken, 210 (JP)**

(74) Representative: **Newstead, Michael John et al
Haseltine Lake & Co. 28 Southampton Buildings
Chancery Lane
London, WC2A 1AT (GB)**

(56) References cited:
PATENTS ABSTRACTS OF JAPAN, vol. 3, no.
124(E-144), 17th October 1979, page 72 E 144;
PATENTS ABSTRACTS OF JAPAN, vol. 3, no.
61(E-113), 26th May 1979, page 104 E113;
SCHOLZ, Handbuch der Magnetband
Speichertechnik, 1980, pages 209, 231

## Description

Field of the Invention

This invention relates to automatic adjustment of recording conditions of tape recorders, more particularly, of auto-reverse type tape recorders.

Background of the Invention

Magnetic recording tapes have different magnetic characteristics due to differences in the magnetic substance coated the base of the tape. Due to the different magnetic characteristics, optimum recording conditions, such as recording bias current, recording level and recording equilization characteristics also differ between tapes. The different characteristics require the user to adjust the recording conditions of the tape recorder whenever the recording tape is replaced. Automatic adjustment for recording conditions in a tape recorder in which a tape cassette is removed and rotated through 180° to play the second side can be accomplished in a manner as disclosed in United States Patent No. 4,297,730.

Moreover, recording conditions for a tape differ between tap recorders due to differences in the mechanical relationship between the tapes and the recording and reproducing heads. In particular, the azimuth angle of the heads with respect to the tape affects the recording conditions, for example as described in "Scholz Handbuch der Magnetbandspeichertecknik", Wien, 1980, pps 209, 231.

What has not therefore been fully appreciated is the adverse effect of the change in the azimuth angle which occurs when a single movable head, for example, a recording or reproducing head, is moved between different recording tracks on the tape during auto-reverse operation of a tape recorder, and adjustment problems arising therefrom. If azimuth conditions of such a moving head are adjusted for its positions for forward and reverse operation, tapes may still be wrongly aligned due to a non-uniformity in shape of cassette tape housings, and the azimuth angle will be incorrect. If the auto-reverse operation of recording conditions in accordance with the manner taught in the above U.S. Patent No. 4,297,739, recording on the reverse track will be based on the same recording conditions as adjusted for a forward track. Thus the automatic adjustment will be for another track of the tape and will be improper for the reverse track due to the mismatching of azimuth angles of the recording and reproducing heads with the tracks.

Accordingly, an object of the invention is to ensure automatic adjustment for optimum recording conditions of tapes for both forward and reverse tracks of the tapes, in tape recorders in which a movable head, movable between the forward and the reverse tracks, provides auto-reverse operation. Optimum recording conditions means broad frequency response with low distortion and noise levels.

According to the present invention there is provided a tape recorder having an auto-reverse tape operating made in which at least a recording head and a reproducing head are movable between locations corresponding to a forward track and a reverse track of a recording tape, said forward and reverse tracks being adjacent one another in a direction perpendicular to the direction of movement of the tape, said tape recorder comprising:

a) means for locating, at a region of the tape, a respective adjustment portion of each of the forward and reverse tracks, for recording on each portion respectively at least one test signal, the adjustment portion of the forward track following the adjustment portion of the reverse track along the tape and in the direction of movement of the tape during reverse tape operation:

b) means for determining an optimum recording condition for the adjustment portion of said forward track of the recording tape for forward tape operation and then determining an optimum recording condition for the adjustment portion of the reverse track for reverse tape operation, the second operation for determining the optimum recording condition for said reverse track being started at a tape location where the tape has been moved forward by a given length after completion of the first operation for determining the optimum recording condition for said forward track, the first operation starting at an end of the recordable portion of the tape, so that if the second of these operations is performed twice, the test signal(s) for the adjustment portion of the reverse track can still be recorded thereon:

c) means for digitally storing the respective optimum recording conditions; and

d) means for adjusting said tape recorder in accordance with the digitally stored recording condition for said forward or reverse track dependent on whether said tape is moving in a forward or reverse direction.

In use of the recorder, the first automatic adjustment for recording conditions for one track is performed with the tape running in one direction. After completion of the first automatic adjustment for the first track, a second automatic adjustment of recording conditions for the second track is performed with the tape running in the other direction, i.e. the reverse direction. Respective data relevant to the first and second automatic adjustments are stored. The data of the first automatic adjustment is used to set the optimum recording conditions for the recording operation of the first track in the forward direction. On the other hand, the data of the second automatic adjustment is used to set the optimum recording conditions for the second track during recording of the second track in the reverse direction.

Brief Description of the Drawings

Fig. 1 is a block diagram showing one embodiment of the present invention;

Fig. 2 is a flow chart showing the flow of operations of the embodiment of Fig. 1; and

Fig. 3 is a diagrammatical view of recording tape for explanation of the present invention.

Detailed Description of the Preferred Embodiments

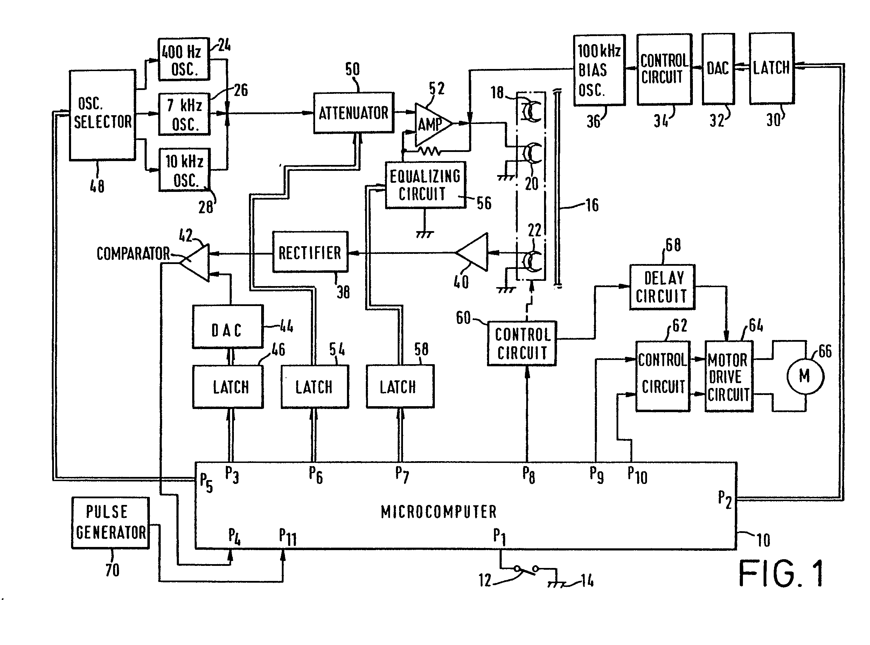

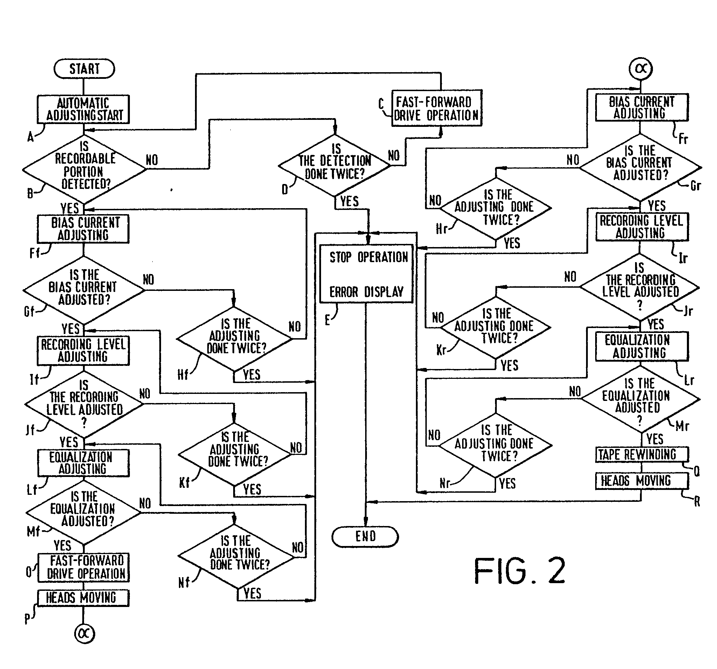

This invention will be described in detail with reference to the accompanying drawings, Figs. 1 to 3. Referring first to Fig. 1, a preferred embodiment of the present invention is illustrated as comprising a microcomputer 10 of conventional design. Microcomputer 10 is programmed in a manner described in detail hereinafter in accordance with the flow chart shown in Fig. 2.

Microcomputer 10 becomes operable when start switch 12, which is connected between port P1 and ground terminal 14, is closed. Microcomputer 10 initially sets the tape recorder into the recording mode in response to instruction A of the flow chart of Fig. 2, so that tape 16 is driven during operation from a supply reel to a take-up reel (not shown) while erase head 18, recording head 20 and reproducing head 22 are driven into contact with tape 16.

Subsequently, microcomputer 10 carries out instruction B. As a result, a search operation of the recordable tape portion of tape 16 is carried out by a recorded signal search operation. During this operation, a test signal is produced from any one of test signal oscillators 24, 26 and 28 respectively oscillating at 400 Hz, 7 KHz and 10 KHz. For example, a 10 KHz test signal is applied to recording head 20 under the condition that all recording conditions, that is, a recording bias current, a test signal level and a recording equilization parameter are set to the standard values by microcomputer 10. The 10 KHz test signal is recorded on tape 16 when the recordable tape portion or magnetic substance coated portion of tape 16 comes in contact with recording head 20. Then the 10 KHz recorded test signal is reproduced by reproducing head 22 at the time the recorded portion comes into contact with reproducing head 22. During the time that the 10 KHz recorded test signal is not reproduced, e.g. the leader tape portion is opposite recording head 20, tape 16 is driven at the fast-forward speed in response to instruction C, to minimize the total adjusting time. If no recordable tape portion is found after a search operation of a given length of time is carried out twice in response to instruction D, the recording mode is stopped and a display of "error" is carried out in response to instruction E. The recordable tape portion search operation is carried out by a photo sensing operation distinguishing the transparent leader tape portion and the non-transparent magnetic material coated tape portion.

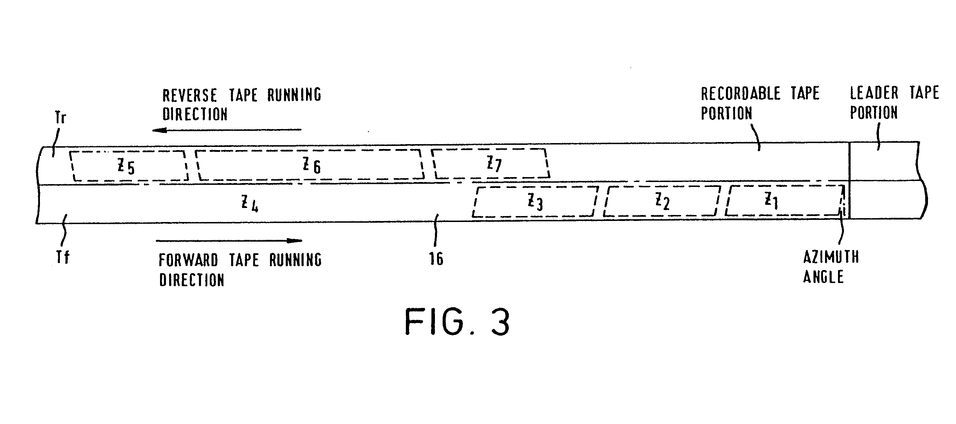

Following the detection of the recordable portion of tape 16, microcomputer 10 carries out instruction Ff. Under this condition, a binary data is outputted from port P2 of microcomputer 10, for adjusting the recording bias to an optimum value. The binary data is applied to latch 30, where the instantaneous value of the data is latched. Then the latched data is applied to digital-to-analog converter (hereinafter referred to as DAC) 32, where the data is converted into a corresponding DC level signal. The DC level signal is applied to control circuit 34 for bias oscillator 3 which oscillates at a high frequency, such as 100 KHz so that the DC level signal controls the value of bias current of the 100 KHz oscillating signal. The 100 KHz bias current is applied to recording head 20 and is recorded on forward track Tf (see Fig. 3) of tape 16. The rest of the recording conditions, i.e., the 100 KHz test signal and the recording equilization parameter are maintained at the respective standard values which are preset in the microcomputer 10.

The binary data from port P2 initially sets the value corresponding to the lowest DC level signal so that the 100 KHz bias current which flows into recording head 29 is very low. With the bias current thus set, the 100 KHz test signal is recorded on tape 16 through recording head 20. The recorded signal is immediately reproduced by reproducing head 22 and applied to rectifier 38 through buffer amplifier 40. The rectified signal is applied to one input of voltage comparator 42. A DC level signal from DAC 44 is applied to the other input of voltage comparator 42. This signal converts a binary data from port P3 through latch 46. The binary data from port P3 is, at any instant, the same value as the binary data from port P2. Comparator 42 outputs a bit signal of L (low) state when the rectified signal is equal or lower than the DC level signal from DAC 44.

The L state bit signal is inputted to port P4 so that the binary data from ports P2 and P3 are digitally stepped up by one. Accordingly, the corresponding DC level signal from DAC 32 slightly increases the 100 KHz bias current supplied from bias oscillator 36, so that the signal reproduced from reproducing head 22 is increased slightly. Then the increased rectified signal and the DC level signal corresponding to the instant binary data from port P3 is again compared at voltage comparator 42. The same operation is continued with the binary data digitally increasing one by one until the rectified signal from rectifier 38 just exceeds the DC level signal from DAC 44. When the rectified signal from rectifier 38 exceeds the DC level signal from DAC 44, comparator 42 outputs a bit signal of H (high) state. The H state bit signal is inputted to port P4 so that the instant binary data is stored in memory as the data for the optimum bias current.

In case the output state of voltage comparator 42 does not change into the H state within a given length of time, microcomputer 10 carries out instruction Ff again in response to instruction Gf. If the output state of comparator 42 still fails to change into the H state, the recorder stops and error is displayed in response to instruction Hf.

When the output state of comparator 42 turns to the H state, microcomputer 10 judges adjustment of the optimum bias current in response to instruction Gf to be completed and moves to the operation of adjusting the recording level according to instruction If. In this operation, the binary data from port P2 is set in accordance with the stored data so that bias oscillator 36 supplies the optimum bias current. The recording equalization parameter is still maintained in the standard condition, while the recording level is varied as described below. In adjusting the recording level, the 400 Hz test signal oscillator 24 is selected to be connected with recording head 20 by oscillator selector 48 which is controlled by means of control data from port P5. The 400 Hz test signal is applied to attentuator 50 which is digitally controlled by binary data outputted from port P6. The attenuated test signal is applied to recording head 20 through recording amplifier 52. Initially, the binary data from port P6 is set in the lowest binary number which will maximally attenuate the test signal. The binary data from port P6 is latched by latch 54, then applied to a control terminal of attenuator 50. The attenuated 400 Hz test signal is recorded on forwarded track Tf of tape 16 adjacent the bias current adjusting signal recorded zone Z1 of forward track Tf (Fig. 8). The recorded 400 Hz test signal is immediately reproduced by reproducing head 22 and applied to rectifier 38. The rectified signal is applied to one input of comparator 42, while a binary data with the same value, at any instant, as the binary data from port P6 is applied to DAC 44 from port P3 through latch 46 and the corresponding DC level signal is applied to the other input of comparator 42.

Comparator 42 outputs a bit signal of L state while the rectified signal is equal to or lower than the DC level signal from DAC 44. The L state bit signal is inputted to port P4 so that the binary data from ports P6 and P3 is digitally increased, one by one in every comparison of the instant rectified signal and the instant corresponding DC level signal from DAC 44. The output of comparator 42 turns to H state when the rectified signal from rectifier 38 just exceeds the DC level signal from DAC 44. The H state bit signal is applied to port P5 so that the recording level adjusting operation is completed and the instant binary data at that time from port P6 is stored in memory of microcomputer 10 as the data for the optimum recording level. In case of the output of comparator 42 failing to change to the H state in a given time, the same operation for adjusting the recording level is performed again from the lowest binary number of the binary data of port P6, in response to instructions Jf and Kf like instructions Gf and Hf in the bias current adjusting operation.

Next, when the H state bit signal is applied to port P4, microcomputer 10 judges the adjustment of the recording level to be complete and moves to instruction Lf for adjusting the recording equalization to an optimum condition. In this operation, the binary data from ports P2 and P6 are set in accordance with the respective stored data corresponding to the respective optimum bias current and recording level, while the recording equalization parameter is varied as described below. In adjusting recording equalization, the 7 KHz test signal of oscillator 26 is selected by oscillator selector 48 which is con-

trolled by control data from port P5 and applied to recording head 20. The 7 KHz test signal is applied to recording amplifier 52 through attenuator 50 which is adjusted for optimum recording level. Recording amplifier 52 has equalizing circuit 56 in a feed back loop of recording amplifier 52. The equalization characteristics of equalizing circuit 56 are controllable by binary data applied to its control terminal. The binary data for equalizing circuit 56 is outputted from port P7 through latch 58. Initially, the binary data from port P7 is set at a low digital number so that the lowest time constant within a range is provided for variable equalization characteristics set in equalizing circuit 56. The 7 KHz test signal with the lowest time constant equilizing characteristics is recorded on forward track Tf of tape 16 adjacent to the recording level adjusting signal recorded at zone Z2 (see Fig. 3).

The recorded 7KHz test signal is immediately reproduced by reproducing head 22 and rectified by rectifier 38. The rectified signal is also applied to comparator 42 and compared with the DC level signal from DAC 44 to which a binary data of the same digital number with the instant binary data from port P7 is supplied from port P3 through latch 46. Comparator 42 outputs a bit signal of L state when the rectified signal from rectifier 38 is equal to or lower than the DC level signal from DAC 44. The L state bit signal is applied to port P5 so that the binary data from ports P7 and P3 are digitally increased one by one, in every operation of the comparison of the instant rectified signal from rectifier 38 and the instant DC level signal from DAC 44.

The output state of comparator 42 turns to the H state, when the rectified signal from rectifier 38 just exceeds the DC level signal from DAC 44. The H state bit signal is applied to port P4 so that microcomputer 10 judges the adjustment of the equalization characteristics to be complete and the binary data from port P7 at that time is stored in the memory of microcomputer 10 as the data for optimum equalization characteristics for tape 16.

In case the output state of comparator 42 fails to change the H state, the time constant of equalizing circuit 56 reaches the highest value within the given range and the same operation is performed in response to instructions Mf and Nf like instructions Gf and Hf in the bias current adjusting operation or instructions Jf and Kf in the recording level adjusting operation.

After the completion of adjusting the recording equalization parameter, microcomputer 10 carries out instruction O so that tape 16 is moved forward by a given length at the recording speed or the fast forwarding speed to a tape location zone Z4 with no recorded signal on forward track Tf of tape 16 adjacent to the recording equalization adjusting signal recorded at zone Z3. Following instruction O, microcomputer 10 carries out instruction P so that the automatic recording conditions for adjusting operation of reverse track Tr of tape 16 is started. According to instruction P, a control signal is outputted from port P8 and applied to control circuit 60 for moving heads 18, 20 and 22 from forward track Tf to reverse track Tr of tape 16. At the same time, a control signal is also outputted from port P9 and applied to control circuit 62 for changing the running of tape 16 to the reverse direction. Control circuit 62 controls, for example, motor drive circuit 64 to drive motor 66 in a direction corresponding to the reverse running of tape 16. Control circuit 62 is adapted for controlling tape speed between constant recording or reproducing speeds in accordance with the control signal applied from port P10, and motor control circuit 64 is adapted for stopping motor 66 while heads 18, 20 and 22 are moved in accordance with the control signal applied from control circuit 60 through delay circuit 68.

After heads 18, 20 and 22 are moved to reverse track Tr and the tape running direction is changed, the automatic adjusting of the recording conditions, i.e., the bias current, recording level and the recording equalization characteristics is accomplished in a manner like that for forward track Tf as described above. That is, an automatic bias current adjusting operation is carried out in response to instruction Fr corresponding to instruction Ff for forward track Tf so that the bias current adjusting signal recorded zone Z5 is put on reverse track Tr of tape 16, next to recording zone Z4 of track Tf. After the completion of instruction Fr, microcomputer 10 carries out instruction Ir for adjusting the recording level so that the recording level adjusting signal is recorded at zone Z6 on reverse track Tr adjacent to bias the current adjusting signal recorded zone Z5. Then microcomputer 10 carries out instruction Lr for adjusting the recording equalization characteristic so that the recording equalization characteristic adjusting signal is recorded at zone Z7 on reverse track Tr adjacent to recording level adjusting signal recorded zone Z6.

The operation for adjusting the recording condition for reverse track Tr is started at a tape location where tape 16 is moved forward by a given length after the completion of the adjusting operation for the recording conditions for forward track Tf as described above. Therefore, if the respective adjusting operations of bias current, recording level and recording equalization characteristics for reverse track Tr were performed twice in response to respective instructions Gr (corresponding to instruction Gf for forward track Tf), Jr (corresponding to instruction Jf for forward track Tf) and Mr (corresponding to instruction Mf for forward track Tf), all of the test signals recorded at zones Z5 and Z7 are put on the recordable portion of the tape reverse track Tr of tape 16.

After the completion of all the adjusting operations for reverse track Tr, microcomputer 10 carries out instruction Q so that tape 16 is rewound or reversed at the normal speed, i.e., the reproducing speed or the fast speed to the end portion of the recordable tape portion of tape 16. The end portion is detected by using a counter which is built into microcomputer 10. The counter counts up or down pulse signals generated from pulse generator 70 in response respectively to the forward running or reverse running of tape 16. Pulse generator 70 generates pulse signals during rotation of a tape reel driving shaft (not shown) and applies the pulse signals to port P11. In instruction Q, microcomputer 10 matches the count value in the counter during rewind operation with the count value stored in memory at the time of the operation in instruction B. When the count values match, the operation is completed and the end portion of tape 16 is detected.

After the detection of the end portion of the recordable portion of tape 16, microcomputer 10 carries out instruction R so that heads 18, 20 and 22 are moved to the forward track Tf of tape 16. Therefore, the tape recorder of this invention is ready for recording operation of the actual audio signal under the optimum recording conditions for the respective tracks Tf and Tr. When recording on the forward track Tf, the data stored during the adjusting operation for forward track Tf are used for setting the recording conditions to bias control circuit 34, level attenuator 50 and equalizing characteristic control circuit 60. On the other hand, when recording on the reverse track Tr, the data stored during the adjusting operation for reverse track Tr are used for setting the recording conditions for bias control circuit 34, level attenuator 50 and equalizing characteristic control circuit 60.

**Claims**

1. A tape recorder having an auto-reverse tape operating mode in which at least a recording head and a reproducing head are movable between locations corresponding to a forward track (Tf) and a reverse track (Tr) of a recording tape, said forward and reverse tracks being adjacent one another in a direction perpendicular to the direction of movement of the tape, said tape recorder comprising:

a) means for locating, at a region of the tape, a respective adjustment portion of each of the forward and reverse tracks, for recording on each portion respectively at least one test signal, the adjustment portion (Z3—Z1) of the forward track following the adjustment portion (Z5—Z7) of the reverse track along the tape and in the direction of movement of the tape during reverse tape operation;

b) means for determining an optimum recording condition for the adjustment portion of said forward track of the recording tape for forward tape operation and then determining an optimum recording condition for the adjustment portion of the reverse track for reverse tape operation, the second operation for determining the optimum recording condition for said reverse track being started at a tape location where the tape has been moved forward by a given length (Z4) after completion of the first operation for determining the optimum recording condition for said forward track, the first operation starting at an end of the recordable portion of the tape, so that if the second of these operations is performed twice, the test signal(s) for the adjustment portion of the reverse track can still be recorded thereon;

c) means for digitally storing the respective optimum recording conditions; and

d) means for adjusting said tape recorder in accordance with the digitally stored recording condition for said forward or reverse track dependent on whether said tape is moving in a forward or reverse direction.

2. A tape recorder according to claim 1, wherein the recording condition includes the recording bias current for the respective forward track and reverse track of the recording tape.

3. A tape recorder according to claim 1, wherein the recording condition includes the recording levels for the respective forward and reverse tracks of the recording tape.

4. A tape recorder according to claim 1, wherein the recording condition includes the recording equalization parameter for the respective forward and reverse tracks of the recording tape.

5. A tape recorder according to claim 1, wherein the recording condition includes the recording bias current, recording levels and recording equalization parameters for the respective forward and reverse tracks of the recording tape.

6. A tape recorder according to any preceding claim, wherein said means for determining an optimum recording condition is controlled by a microcomputer.

7. A tape recorder according to claim 6, wherein said microcomputer includes said storing means.

**Patentansprüche**

1. Bandgerät mit automatischer Umkehrfunktion, bei dem zumindest ein Aufnahmekopf und ein Wiedergabekopf zwischen Orten bewegbar sind, die mit einer Vorwärtsspur ($T_f$) und einer Rückwärtsspur ($T_r$) eines Aufnahmebandes korrespondieren, die einander benachbart sind in einer Richtung senkrecht zu der Richtung der Bewegung des Bandes, mit

a) einer Einrichtung zum Auffinden eines jeweiligen Einstellabschnitts in einem Bereich des Bandes sowohl für die Vortwärtsspur als auch für die Rückwärtsspur zum jeweiligen Aufzeichnen zumindest eines Prüfsignals in jedem Abschnitt, wobei der Einstellabschnitt ($Z_3$—$Z_1$) der Vortwärtsspur dem Einstellabschnitt ($Z_5$—$Z_7$) der Rückwärtsspur längs des Bandes und in Richtung der Bewegung des Bandes während eines Rückwärtslaufbetriebes folgt.

b) einer Einrichtung zum Bestimmen einer optimalen Aufnahmebedingung für den Einstellabschnitt der Vortwärtsspur des Aufnahmebandes für Vorwärtslaufbetrieb und dann zum Bestimmen einer optimalen Aufnahmebedingung für den Einstellabschnitt der Rückwärtsspur für Rückwärtslaufbetrieb, wobei der zweite Vorgang zum Bestimmen der optimalen Aufnahmebedingung für die Rückwärtsspur an einer Stelle des Bandes gestartet wird, an die das Band um eine vorbestimmte Länge ($Z_4$) nach Beendigung des ersten Vorgangs zum Bestimmen der optimalen Aufnahmebedingung für die Vorwärtsspur vorwärtsbewegt ist, wobei der erste Vorgang an einem Ende des aufzeichnungsfähigen Abschnitts des Bandes startet, so daß, wenn der zweite dieser Vorgänge zweimal durchgeführt wird, das mindestens eine Prüfsignal für den Einstellabschnitt der Rückwärtsspur noch darauf aufgezeichnet werden kann,

c) einer Einrichtung zum digitalen Speichern der jeweiligen opitmalen Bedingungen und

d) einer Einrichtung zum Einstellen des Bandgerätes in Übereinstimmung mit der digital gespeicherten Aufnahmebedingung für die Vorwärtsspur oder die Rückwärtsspur abhängig davon, ob sich das Band in Vorwärts- oder in Rückwärtsrichtung bewegt.

2. Bandgerät nach Anspruch 1, bei dem die Aufnahmebedingung den Aufnahmevorerregungsstrom für die jeweilige Vorwärtsspur und Rückwärtsspur des Aufnahmebandes einschließt.

3. Bandgerät nach Anspruch 1, bei dem die Aufnahmebedingung die Aufnahmepegel für die jeweiligen Vorwärts- und Rückwärtsspuren des Aufnahmebandes einschließt.

4. Bandgerät nach Anspruch 1, bei dem die Aufnahmebedingung Aufnahmeentzerrungsparameter für die jeweiligen Vorwärts- und Rückwärtsspuren des Aufnahmebandes einschließt.

5. Bandgerät nach Anspruch 1, bei dem die Aufnahmebedingung den Aufnahmevorerregungsstrom, die Aufnahmepegel und die Aufnahmeentzerrungsparameter für die jeweiligen Vorwärts- und Rückwärtsspuren des Aufnahmebandes einschließt.

6. Bandgerät nach einem der vorstehenden Ansprüche, bei dem die Einrichtung zum Bestimmen einer optimalen Aufnahmebedingung durch einen Mikrorechner gesteuert ist.

7. Bandgerät nach Anspruch 6, bei dem der Mikrorechner die Speichereinrichtung enthält.

**Revendications**

1. Un enregistreur à bande comprenant un mode de fonctionnement à inversion automatique de la bande, dans lequel au moins une tête d'enregistrement et une tête de reproduction sont mobiles entre des emplacements correspondant à une piste vers l'avant (Tf) et une piste en retour (Tr) d'une bande d'enregistrement, lesdites pistes vers l'avant et en retour étant adjacentes l'une à l'autre dans une direction perpendiculaire à la direction du mouvement de la bande, ledit enregistreur à bande comprenant:

a) des moyens pour positionner sur une région de la bande une partie de réglage respective de chacune des pistes vers l'avant et en retour, pour enregistrer sur chaque partie respectivement au moins un signal d'essai, la partie de réglage (Z3—Z1) de la piste vers l'avant suivant la partie de réglage (Z6—Z7) de la piste de retour le long de la bande et dans la direction du mouvement de la bande pendan l'opération d'inversion de la bande,

b) des moyens pour déterminer une condition d'enregistrement optimale pour la partie de régale de ladite piste vers l'avant de la bande d'enregistrement en vue du fonctionnement de la bande vers l'avant, et ensuite pour déterminer une condition d'enregistrement optimale pour la partie de réglage de la piste en retour pour le fonctionnement de la piste en retour, la seconde opération pour déterminer la condition d'enregistrement optimale de ladite piste en retour étant démarrée en un emplacement de la bande où la bande a été déplacée vers l'avant sur une longueur donnée (Z4) après la fin de la première opération pour déterminer la condition optimale d'enregistrement de ladite piste vers l'avant, la première opération commençant à la fin de la partie de la bande qui peut supporter un enregistrement, de manière que si la seconde de ces opérations est réalisée deux fois, le ou les signaux d'essai de la partie de réglage de la piste en retour peuvent toujours être enregistrés sur elle,

c) des moyens pour mettre en mémoire numériquement les conditions optimales respectives d'enregistrement, et

d) des moyens pour régler ledit enregistreur à bande selon la condition d'enregistrement stockée numériquement pour lesdites pistes vers l'avant et en retour en fonction du fait que ladite bande se déplace en direction vers l'avant ou en direction en retour.

2. Un enregistreur à bande selon la revendication 1, caractérisé en ce que la condition d'enregistrement comprend le courant de polarisation d'enregistrement pour les pistes respectives vers l'avant et en retour de la bande d'enregistrement.

3. Un enregistreur à bande selon la revendication 1, caractérisé en ce que la condition d'enregistrement comprend les niveaux d'enregistrement pour les pistes respectives vers l'avant et en retour de la bande d'enregistrement.

4. Un enregistreur à bande selon la revendication 1, caractérisé en ce que la condition d'enregistrement comprend le paramètre d'égalisation d'enregistrement pour les pistes respectives vers l'avant et en retour de la bande d'enregistrement.

5. Un enregistreur à bande selon la revendication 1, caractérisé en ce que la condition d'enregistrement comprend le courant de polarisation d'enregistrement, les niveaux d'enregistrement et les paramètres d'egalisation d'enregistrement pour les pistes respectives vers l'avant et en retour de la bande d'enregistrement.

6. Un enregistreur à bande selon l'une des revendications precédéntes, caractérisé en ce que lesdits moyens pour déterminer une condition d'enegistrement optimale sont commandés par un microordinateur.

7. Un enregistreur à bande selon la revendication 6, caractérisé en ce que le microordinateur comprend lesdits moyens de mise en mémoire.

FIG. 1

FIG. 2

0 083 207

REVERSE TAPE RUNNING DIRECTION

RECORDABLE TAPE PORTION

LEADER TAPE PORTION

Tr

$z_5$

$z_6$

$z_7$

$z_4$

$z_3$

$z_2$

$z_1$

Tf

FORWARD TAPE RUNNING DIRECTION

16

AZIMUTH ANGLE

FIG. 3